# EUROPEAN PATENT APPLICATION

(11) **EP 3 757 690 A1**
(43) Date of publication of application: **30.12.2020**
(21) Application number: 19182499.4
(22) Date of filing: 26.06.2019
(51) Int. Cl.: G05B 19/042, G05B 19/05

(54) **DEVELOPMENT OF AN APPLICATION FOR A TECHNICAL SYSTEM**

(71) Applicant: Siemens Aktiengesellschaft, 80333 München (DE)
(72) Inventor: Frank, Johannes, 81673 München (DE); Macher, Andreas, 92318 Neumarkt (DE); Soler Garrido, Josep, 81547 München (DE); Thon, Ingo, 85630 Grasbrunn (DE)

(57) **Abstract**

The invention specifies a computerized method to support the development of an application for a technical system, whereas the technical system comprises a programmable controller (1) connected with a processing unit (2), whereas the application is designed to be computed on the processing unit (2), comprising the steps:
- Importing (A) a computational structure (4) of the application into a computational unit,
- generating (F) an interface configuration (7) of the application based on the imported computational structure (4), whereas the interface configuration (7) describes the input interface, the output interface, and the data structures used by the processing unit (2) and the programmable controller (1) for data transfer between them,
- generating (F) application specific files (8, 9) to be used by the programmable controller (1) and the processing unit (2) based on the generated interface configuration (7), and
- including (G) the generated application specific files (8, 9) in the programmable controller (1) and the processing unit (2) .

The invention further specifies a technical system, a computer program product, and a computer-readable storage medium.

## Description

### Field of the Invention

The present invention relates to a computerized method to support the development of an application for a technical system, a technical system, a computer program product, and a computer-readable storage medium.

### Background of the Invention

The core component of industrial automation systems is the Programmable Logic Controller (PLC). The PLC processes the inputs from the system and generates outputs to control it, often with real-time constraints.

Additional tasks like heavy computations based on neural networks are off-loaded in order to not violate those constraints. This can happen via dedicated external processing units by off-loading the heavy computations and only returning the results to the PLC program in order to react on those.

Therefore, the control-process running on the PLC needs to communicate with the process on the external unit. If the external unit is tightly integrated in the automation system, the communication happens typically via the Process Image (PI). The PI is a memory area in the PLC which reflects the current sensor and actuator values. The PI is updated cyclically by the PLC, so that the PLC program does not have to update each sensor/actuator individually. This ensures a deterministic and real-time capable communication.

The external unit that is attached to the PLC has a dedicated range within the PI. The communication via PI happens typically with predefined data structures that are serialized for transfer and later de-serialized into their original structure.

However, with an external unit the user has the possibility to deploy applications which need to be configured or programmed by the user. In that case the data structures, that are transferred, are application dependent and determined during the development of the application. However, in the case of an external unit the user typically deploys applications that process data by means of neural networks. Since the neural networks are developed beforehand the input and output structure of the neural networks are given. Therefore, it can be derived which data structures the user probably will transfer between the PLC program and the external application.

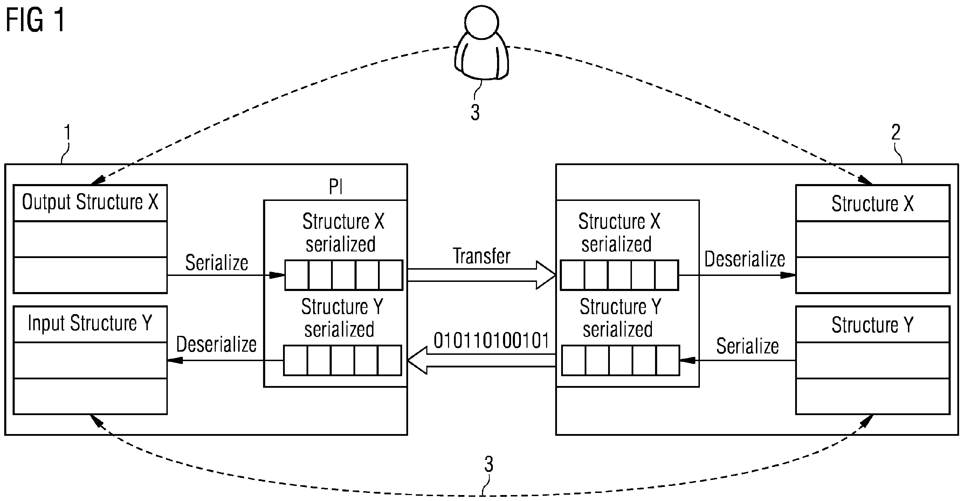

In the current situation the user must manually define the data structures and ensure that they are consistent within the PLC program and the external application (see Fig. 1, PLC program 1 and external application 2). This manual synchronization (3 in Fig. 1) of data structures is time consuming and error prone. Moreover, often two different users (PLC engineer and artificial intelligence expert) are involved - this generates additional coordination effort.

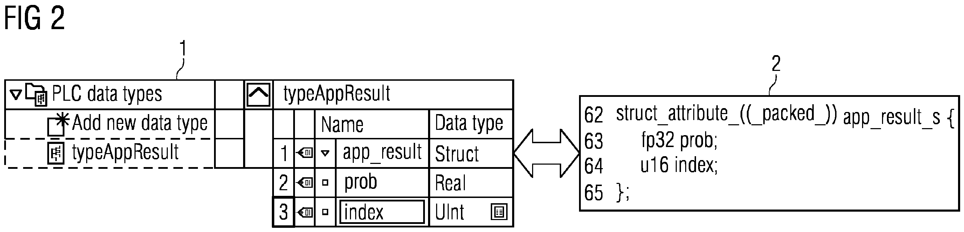

A specific example how such structures can look like are given in Fig. 2. Here the structure definition in the PLC 1 and the corresponding structure in the application of the external unit 2 are shown (in this case in the programming language C++).

### Summary of the Invention

The objective of the present invention is to improve the data transfer between a programable controller and an application on a connected external unit.

The invention is given by the features of the independent claims. Advantageous embodiments are provided in the dependent claims. Further features, application possibilities, and advantages of the invention result from the following description.

According to the invention the objective is accomplished by generating application specific files to be used by the programmable controller and the processing unit based on a generated interface configuration based on the computational structure of the application to be processed on the processing unit.

The invention further offers a solution to define consistent data structures that are used by the units involved. Additionally, it offers a solution to recommend data structures given by the application context, i.e. given by a neural network input and output structure. Furthermore, it is possible to automatically generate application specific interfaces for communication and data transfer, e.g. function block sources and application header files.

The invention claims a computerized method to support the development of an application for a technical system, whereas the technical system comprises a programmable controller connected with a processing unit, whereas the application is designed to be computed on the processing unit. The method comprises the steps:
- Importing a computational structure of the application into a computational unit,
- generating an interface configuration of the application based on the imported computational structure, whereas the interface configuration describes the input interface, the output interface, and the data structures used by the processing unit and the programmable controller for data transfer between them,
- generating application specific files to be used by the programmable controller and the processing unit based on the generated interface configuration, and
- including the generated application specific files in the programmable controller and the processing unit.

The description of the input interface, the output interface, and the data structures used by the application and the programmable controller for data transfer between them by the interface configuration has the advantage of a consistent data structure between the programmable controller and the processing unit.

According to a further embodiment the technical system is an industrial automation system with multiple configurable components. The technical system can also be an engineering system.

According to a further embodiment the programmable controller is a Programmable Logic Controller (PLC).

According to a further embodiment the processing unit is extern of the technical system.

According to a further embodiment the programmable controller and the processing unit communicate via the process images (PI) of the programmable controller.

According to a further embodiment the process image (PI) reflects current sensor and actuator values of the programmable controller.

According to a further embodiment the imported computational structure is a computational graph with input nodes and output nodes which are extracted and optionally selected by a user before the generation of the interface configuration. According to a further embodiment the imported computational structure is a neural network.

According to a further embodiment the application specific files are:
- application specific header files and functions to be used by the processing unit to exchange data with the programmable controller and
- application specific data structures and function blocks to be used by the programmable controller to exchange data with the processing unit.

According to a further embodiment the import of the generated application specific files in the programmable controller and the processing unit happens automatically into a specific technical system previously specified by the user in advance.

This means that the import of the application specific files e.g. the programmable controller application specific data structures and function blocks to a specific technical system can happen automatically by using open interfaces. For an automatic import the user would specify the technical system or project in an initial step.

According to a further embodiment the computational unit is a personal computer connected with the technical system and/or a computational unit of the programmable controller.

This means that the computational structure (e.g. the neural network) is imported directly into the technical project where the interface configuration (e.g. data structures) and application specific files (e.g. function blocks are automatically generated. The application specific header files and function implementations for application could then be exported from the programmable controller technical system or passed to another tool where the application is created. The present invention further claims a technical system comprising a programmable controller connected with a processing unit, whereas the processing unit comprises applications generated according to the inventive method.

The present invention further claims a computer program product comprising instructions which, when the program is executed by the computational device, cause the computational device to carry out the steps of the inventive method.

The present invention further claims a computer-readable storage medium comprising instructions which, when executed by the computational device, cause the computational device to carry out the steps of the inventive method.

The advantages of the present invention are:
- Analysis of the computational structure of e.g. computation graphs and node structure extraction for e.g. neural network-based applications.
- Automatic suggestion of an interface configuration (interface data structures) for communication and data transfer between an application of a computational unit (e.g. an external application) and a programmable controller program (e.g. a PLC program) that can be modified for specific user needs.
- Consistent data structures across all units (e.g. computational unit and programmable controller program (PLC)) and no error-prone manual synchronization. This helps also to bridge the gap between automation and the artificial intelligence (AI) world.
- Less time for implementation of communication and data transfer functionalities due to application specific generation of application specific header files, (transfer) functions, programmable controller/ PLC structures, and function blocks (FBs) (= artifacts). Possibility to automatically import generated artifacts into the technical system/ an engineering project.
- The usage can be simplified with a GUI that guides user through each step.

Further benefits and advantages of the present invention will become apparent after a careful reading of the detailed description with appropriate reference to the accompanying drawings.

### Brief Description of the Drawings

- Fig. 1: visualizes the manual synchronization of the data structures between a PLC program and an external application,
- Fig. 2: shows a data structure definition in a programmable controller and the corresponding data structure in the application of a (external) processing unit,
- Fig. 3: shows a flow-diagram of an application example of a method to support the development of an application for a technical system, and
- Fig. 4: shows a modification of the interface configuration.

### Detailed Description of the Invention

Fig. 1 visualizes the manual synchronization 3 of the data structures between a programmable controller 1 (e.g. a PLC) program and a processing unit 2 (e.g. an external processing unit) application. In the current situation the user must manually define the data structures and ensure that they are consistent within the programmable controller 1 program and the processing unit 2 application. This manual synchronization 3 of data structures is time consuming and error prone. Moreover, often two different users (a PLC engineer and an artificial intelligence expert for the processing unit 2) are involved - this generates additional coordination effort.

A specific example how such data structures can look like are given in Fig. 2. Here the data structure definition in the programmable controller 1 and the corresponding data structure in the application of the (external) processing unit 2 are shown (in this case in the programming language C++).

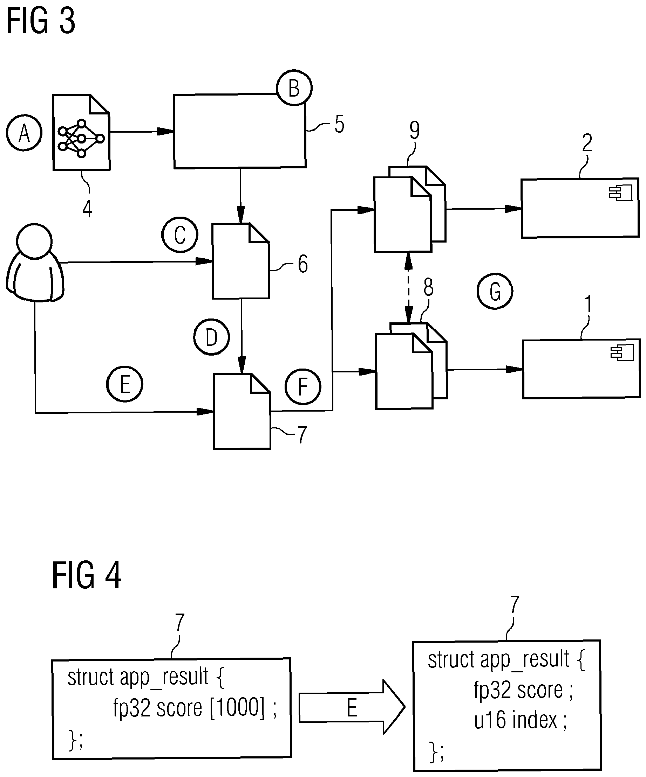

Fig. 3 shows flow-diagram of an application example of a method to support the development of an application for a technical system.

The user imports A a computational structure 4 (e.g. a neural network) that will be deployed in the external application of the processing unit 2 to a personal computer or a machine computer (of e.g. a programmable controller 1 or a programmable logic controller PLC). Typically, neural networks are described as computation graphs 5. We assume the neural network is provided in a well-known format e.g. TensorFlow SavedModel, Prototxt.

Than in the next step, the computation graph 5 of the neural network is analyzed to extract B all possible input and output nodes 6.

Than in the next step, optionally, if not all inputs and output nodes 6 are needed the user selects C the input and output nodes 6 that will be used in the application.

Than in the next step, the structures of the selected input and output nodes 6 get extracted D into an interface configuration 7. The interface configuration 7 describes the input/output interfaces and structures that will be used by the external application of the processing unit 2 and the (PLC) program of the programmable controller 1 in order to transfer data between them. The user can either accept or modify E the interface configuration 7. E.g. a neural network that classifies images typically returns a list of confidence values for each class. However, the user might want to return to the PLC program of the programmable controller 1 only the class with the highest confidence score. The user can modify E the structure in the interface configuration 7 accordingly to include only one score with the corresponding class index instead of the list of all scores, this is shown in Fig. 4.

Also, the input interface can be modified E. E.g. a neural network for the analysis of sequential data typically receives a time window (of e.g. 50 values) as input. However, the programmable controller 1 might send only one value for each time step at a time. Therefore, the input interface would be modified E for one value.

Optionally, the user could also skip all previous steps if there will be no neural network deployed in the application. In this case he can still define the interfaces and structures that might be used to transfer data between the external application of the processing unit 2 and the PLC program of the programmable controller 1.

Than in the next step, based on the interface configuration 7 following files with consistent data structures (indicated by the dashed arrow) get generated F:
a. The application specific header files and function 9 implementations that will be used by the external application of the processing unit 2 in order to receive data from the PLC program of the programmable controller 1 or send data to the PLC program of the programmable controller 1.
b. The application specific data structures and function blocks (FBs) 8 that will be used within the PLC program of the programmable controller 1 of the engineering project in order to send data to the external application of the processing unit 2 or receive data from the external application of the processing unit 2.

Than in the final step, the generated files (application specific header files and function 9 and application specific data structures and function blocks (FBs) 8) get included G/ imported in the PLC program of the programmable controller 1 and the external application of the processing unit 2 of the technical project. The application specific header files and function 9 implementations get included G/ imported in a development environment for the external application of the processing unit 2. Optionally, they can be included G/ imported in an external build system together with the neural network. The build system compiles and packages the external application and neural network into an artifact that can be deployed directly on the processing unit 2.

In order to simplify the whole process a graphical user interface (GUI) can guide the user through the steps of neural network import A, node selection C, and interface configuration and modification E.

Additionally, the inclusion G/ import of the PLC application specific data structures and function blocks (FBs) 8 can happen automatically by using open interfaces. For an automatic inclusion G/ import the user would specify the technical system/ engineering project in the initial step. E.g. the user specifies the project/ technical system in advance and the PLC application specific data structures and function blocks (FBs) 8 are automatically transferred to this project.

Another approach is to include G/ import the neural network directly in the engineering project where application specific data structures and function blocks (FBs) 8 are automatically generated. The application specific header files and function 9 implementations for the external application of the processing unit 2 could then be exported from the PLC engineering project or passed to another tool where the external application of the processing unit 2 is created.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### List of Reference Signs

1 programmable controller
2 processing unit
3 manual synchronization
4 computational structure
5 computation graph
6 input and output nodes
7 interface configuration
8 application specific data structures and function blocks
9 application specific header files and functions

A import
B analyse and extract nodes
C select nodes
D extract structures
E accept or modify
F generate
G include

## Claims

1. Computerized method to support the development of an application for a technical system, whereas the technical system comprises a programmable controller (1) connected with a processing unit (2), whereas the application is designed to be computed on the processing unit (2), **comprising** the steps:
- Importing (A) a computational structure (4) of the application into a computational unit,
- generating (F) an interface configuration (7) of the application based on the imported computational structure (4), whereas the interface configuration (7) describes the input interface, the output interface, and the data structures used by the processing unit (2) and the programmable controller (1) for data transfer between them,
- generating (F) application specific files (8, 9) to be used by the programmable controller (1) and the processing unit (2) based on the generated interface configuration (7), and
- including (G) the generated application specific files (8, 9) in the programmable controller (1) and the processing unit (2) .

2. Method according to claim 1,
**whereas** technical system is an industrial automation system with multiple configurable components.

3. Method according to one of the previous claims,
**whereas** programmable controller (1) is a Programmable Logic Controller.

4. Method according to one of the previous claims,
**whereas** the processing unit (2) is extern of the technical system.

5. Method according to one of the previous claims,
**whereas** the programmable controller (1) and the processing unit (2) communicate via the process images of the programmable controller.

6. Method according to claim 5,
**whereas** the process image reflects current sensor and actuator values of the programmable controller (1).

7. Method according to one of the previous claims,
**whereas** the imported computational structure (4) is a computational graph with input nodes and output nodes (6) which are extracted and optionally selected (C) by a user before the generation (F) of the interface configuration (7).

8. Method according to one of the previous claims,
**whereas** the imported computational structure (4) is a neural network.

9. Method according to one of the previous claims,
**whereas** the application specific files are:
- application specific header files and functions (9) to be used by the processing unit (2) to exchange data with the programmable controller (1) and
- application specific data structures and function blocks (8) to be used by the programmable controller (1) to exchange data with the processing unit (2).

10. Method according to one of the previous claims,
**whereas** the import of the generated application specific files (8, 9) in the programmable controller (1) and the processing unit (2) happens automatically into a specific technical system previously specified by the user in advance.

11. Method according to one of the previous claims,
**whereas** the computational unit is a personal computer connected with the technical system and/or a computational unit of the programmable controller (1).

12. Technical system comprising a programmable controller (1) connected with a processing unit (2),
**whereas** the processing unit (2) comprises applications generated according to the method according to one of the previous claims.

13. A computer program product comprising instructions which, when the program is executed by the computational device, cause the computational device to carry out the steps of the method according to one of the claims 1 to 11.

14. A computer-readable storage medium comprising instructions which, when executed by the computational device, cause the computational device to carry out the steps of the method according to one of the claims 1 to 11.
